# EUROPÄISCHE PATENTSCHRIFT

(11) **EP 2 788 237 B1**
(45) Veröffentlichungstag und Bekanntmachung des Hinweises auf die Patenterteilung: **14.10.2015**
(21) Anmeldenummer: 12799109.9
(22) Anmeldetag: 28.11.2012
(51) Int. Cl.: B60T 10/02, F16D 57/04

(54) **VERFAHREN ZUM STEUERN EINES ÜBER EINE TRENNKUPPLUNG ABKOPPELBAREN HYDRODYNAMISCHEN RETARDERS**
METHOD FOR CONTROLLING A HYDRODYNAMIC RETARDER THAT CAN BE DISENGAGED BY A DISCONNECT CLUTCH
PROCÉDÉ DE COMMANDE D'UN RALENTISSEUR HYDRODYNAMIQUE POUVANT ÊTRE DÉSACCOUPLÉ AU MOYEN D'UN EMBRAYAGE DE COUPURE

(30) Priorität: 09.12.2011 DE 102011120621
(43) Veröffentlichungstag der Anmeldung: 15.10.2014
(73) Patentinhaber: Voith Patent GmbH, 89522 Heidenheim (DE)
(72) Erfinder: MENNE, Achim, 74564 Crailsheim (DE); HUTH, Tilman, 74589 Satteldorf (DE); LAUKEMANN, Dieter, 74564 Crailsheim (DE); KOCH, Werner, 73326 Deggingen (DE); KLEMENT, Werner, 89520 Heidenheim (DE); BECKE, Martin, 89075 Ulm (DE)
(74) Vertreter: Dr. Weitzel & Partner
(86) Internationale Anmeldenummer: PCT/EP2012/073827
(87) Internationale Veröffentlichungsnummer: WO 2013/083457

(56) Entgegenhaltungen:
- DE-A1-102005 052 121
- DE-A1-102007 024 698

## Beschreibung

Die vorliegende Erfindung betrifft ein Verfahren zum Steuern eines über eine Trennkupplung mechanisch abkoppelbaren hydrodynamischen Retarders in einem Kraftfahrzeug, im Einzelnen gemäß dem Oberbegriff von Anspruch 1.

Um die Leerlaufverluste eines hydrodynamischen Retarders auf Null abzusenken, wurde bereits vorgeschlagen, den hydrodynamischen Retarders mittels einer Trennkupplung vom Antriebsstrang, den er im Bremsbetrieb abbremsen soll, in einem Nichtbremsbetrieb abzukoppeln. Gleichzeitig wird beim Übergang vom Bremsbetrieb zum Nichtbremsbetrieb der Arbeitsraum vom Arbeitsmedium entleert, das im Bremsbetrieb im Arbeitsraum eine hydrodynamische Kreislaufströmung zur Übertragung von Drehmoment vom Rotor auf den Stator oder bei einem Gegenlaufretarder vom Rotor auf einen gegensinnig umlaufenden Gegenlaufrotor überträgt und dadurch den Rotor und mit diesem den antreibenden Antriebsstrang abbremst.

Das Ein- und Ausschalten eines hydrodynamischen Retarders wird in der Regel durch eine elektronische Steuervorrichtung gesteuert, wobei die elektronische Steuervorrichtung Anforderungen bezüglich des Einschaltens, Ausschaltens oder des Einstellens eines bestimmten Bremsmomentes beziehungsweise einer bestimmten Bremsstufe entweder von einem Fahrzeugführer empfängt, der eine entsprechende Eingabevorrichtung betätigt, beispielsweise einen Lenkstockhebel, oder in manchen Ausgestaltungen auch von einem sogenannten Fahrerassistenzsystem, beispielsweise einem Geschwindigkeitsregelsystem oder Abstandshaltesystem des Fahrzeugs. Immer dann, wenn beispielsweise die elektronische Steuervorrichtung eine Retarderausschaltanforderung feststellt, bewirkt sie das Entleeren des Arbeitsraumes vom Arbeitsmedium und das Öffnen der Trennkupplung.

Im Hinblick auf die Verkehrssicherheit und den Komfort ist es wichtig, dass Anforderungen bezüglich des Einschaltens, Ausschaltens oder Einstellens eines bestimmten Bremsmomentes des hydrodynamischen Retarders möglichst schnell umgesetzt werden. Ziel ist beispielsweise eine Umsetzung einer entsprechenden Anforderung in weniger als einer Sekunde oder sogar weniger als 0,5 Sekunden.

Es ist daher verständlich, dass, wenn beispielsweise eine Retarderausschaltanforderung festgestellt wird, die Entleerung des Arbeitsraumes und das Öffnen der Trennkupplung herkömmlich unmittelbar und beschleunigt durchgeführt wird.

In der Praxis hat sich nun herausgestellt, dass die gewünschten Reaktionszeiten in der Regel eingehalten werden können. Allerdings ist besonders bei häufigen Einschalt- und Ausschaltvorgängen von hydrodynamischen Retardern, die beim Übergang vom Bremsbetrieb zum Nichtbremsbetrieb vom Antriebsstrang mechanisch abgekoppelt werden und beim Übergang vom Nichtbremsbetrieb zum Bremsbetrieb durch reibende Schlupfüberbrückung in der Trennkupplung wieder zugeschaltet werden, der Verschleiß in der Kupplung relativ hoch und damit der Wartungsaufwand groß.

Der vorliegenden Erfindung liegt die Aufgabe zugrunde, ein Verfahren zum Steuern eines Retarders der eingangs dargestellten Art anzugeben, bei welchem der Wartungsaufwand reduziert werden kann.

DE 10 2007 024 698 A1 beschreibt ein Retardersteuerverfahren wobei der Retarder in ein Stand-by-Zustand mit geschlossener Trennkupplung und mit vollständig oder weitgehend entleertem Arbeitsraum geschaltet werden kann.

Die erfindungsgemäße Aufgabe wird durch ein Verfahren mit den Merkmalen von Anspruch 1 gelöst. In den abhängigen Ansprüchen sind vorteilhafte und besonders zweckmäßige Ausgestaltungen der Erfindung angegeben.

Die Erfinder haben erkannt, dass der Verschleiß der Trennkupplung wesentlich reduziert werden kann, wenn sichergestellt ist, dass ein Anfahren des hydrodynamischen Retarders beziehungsweise ein Synchronisieren der Trennkupplung beim Übergang vom Nichtbremsbetrieb zum Bremsbetrieb nur dann erfolgt, wenn der Arbeitsraum des hydrodynamischen Retarders vollständig oder weitgehend leer von Arbeitsmedium ist. Um dies nun sicherzustellen, greift das erfindungsgemäße Verfahren auf den Ausschaltvorgang des hydrodynamischen Retarders zurück, das heißt auf den Übergang vom Bremsbetrieb zum Nichtbremsbetrieb. Bereits hier soll sichergestellt werden, dass sich der Arbeitsraum des Retarders vollständig beziehungsweise nahezu vollständig entleert. Dies war bei bekannten Ausführungsformen nicht immer gewährleistet, da die Entleerung teilweise oder ausschließlich mittels der Pumpwirkung des Retarders beziehungsweise des Rotors des Retarders bewirkt wird und somit die notwendige Zeitspanne, über welcher der Rotor nach dem Ausschaltbefehl, das heißt nach der Retarderausschaltanforderung, umläuft, bis der Entleervorgang abgeschlossen ist, in Abhängigkeit von Randbedingungen variiert. Beispielsweise dauert die Entleerung des Arbeitsraums mit abnehmender Drehzahl des Rotors oder mit zunehmendem Füllungsgrad des Arbeitsraums länger.

Gemäß dem erfindungsgemäßen Verfahren wird daher beim Übergang vom Bremsbetrieb zum Nichtbremsbetrieb, der durch eine Retarderausschaltanforderung eines Fahrerassistenzsystems oder durch Betätigen einer Eingabevorrichtung durch einen Fahrzeugführer initiiert wird, nach der Feststellung des Vorliegens einer Retarderausschaltanforderung die Trennkupplung über eine vorgegebene Zeitspanne geschlossen gehalten und der Arbeitsraum des Retarders durch fortgesetztes Antreiben des Rotors und Unterbrechen einer Zufuhr von Arbeitsmedium in den Arbeitsraum vom Arbeitsmedium entleert, in der Regel unter teilweise oder ausschließlicher Ausnutzung der Pumpwirkung des Rotors, wobei die vorgegebene Zeitspanne in Abhängigkeit wenigstens einer der folgenden Größen oder wenigstens einer mit einer der folgenden Größen korrelierenden Größe, die bei und/oder nach der Feststellung der Retarderausschaltanforderung vorliegt, variiert wird:
- der Drehzahl des Rotors des hydrodynamischen Retarders;
- eines Auslassdruckes, gegen welchen die Entleerung des Arbeitsmediums aus dem Arbeitsraum erfolgt;
- des Füllungsgrades des Arbeitsraums mit Arbeitsmedium;
- der Temperatur des Arbeitsmediums;
- des Bremsmomentes des hydrodynamischen Retarders.

Unter Trennkupplung ist vorliegend jedes Bauteil zu verstehen, das in einem ersten Betriebszustand eine Leistungsübertragung, insbesondere mechanische Leistungsübertragung herstellt und in einem zweiten Betriebszustand unterbricht, somit beispielsweise Synchronelemente, Reibkupplungen und anderes.

Grundsätzlich ist es auch möglich, den hydrodynamischen Retarder dadurch mechanisch abzukoppeln, dass der Rotor weiter angetrieben wird aber der Stator über eine Trennkupplung von einer Abstützung an einem stationären Bauteil gelöst wird, so dass er frei mit dem Rotor umläuft.

Als Fahrerassistenzsystem kommt jegliche Steuervorrichtung in Betracht, die eine Retarderbremsmomentanforderung ausgibt, insbesondere jedoch ein Geschwindigkeitsregelsystem oder Abstandshaltesystem. Die vorgegebene Zeitspanne wird insbesondere mit abnehmender Drehzahl des Rotors beziehungsweise mit Verringerung der damit korrelierenden Größe vergrößert. Wenn der Auslassdruck als Randbedingung für die Variation der Zeitspanne herangezogen wird, so wird die vorgegebene Zeitspanne insbesondere mit zunehmendem Auslassdruck oder mit zunehmender Größe, die mit dem Auslassdruck korreliert, vergrößert.

Wenn der Füllungsgrad als Randbedingung herangezogen wird, so wird die Zeitspanne insbesondere mit zunehmendem Füllungsgrad beziehungsweise mit zunehmender mit dem Füllungsgrad korrelierender Größe vergrößert.

Wenn die Temperatur des Arbeitsmediums als Randbedingung herangezogen wird, so wird insbesondere, um die Viskosität des Arbeitsmediums beim Entleeren zu berücksichtigen, die vorgegebene Zeitspanne mit zunehmender Temperatur verringert, beziehungsweise mit zunehmender Größe, die mit der Temperatur korreliert.

Gleichfalls ist es möglich, wenn das Bremsmoment des hydrodynamischen Retarders als Randbedingung berücksichtigt wird, die vorgegebene Zeitspanne mit zunehmendem Bremsmoment zu vergrößern, beziehungsweise mit zunehmender Größe, die mit dem Bremsmoment korreliert.

Eine Größe, die mit dem Bremsmoment korreliert, ist in der Regel der genannte Füllungsgrad des Arbeitsraumes mit Arbeitsmedium. Eine andere Größe ist beispielsweise der sogenannte Gehäusedruck des hydrodynamischen Retarders, das heißt jener statische Druck außerhalb des Arbeitsraumes in dem Gehäuse, das den Arbeitsraum umgibt. Eine weitere korrelierende Größe ist beispielsweise der sogenannte Stelldruck des hydrodynamischen Retarders, das heißt der Druck, mit welchem der hydrodynamische Retarder in der Regel über eine Retardersteuervorrichtung angesteuert wird, um das gewünschte Bremsmoment einzustellen. Mit dem Stelldruck kann beispielsweise eine verdrängende Wirkung auf einen Vorratsbehälter für Arbeitsmedium des hydrodynamischen Retarders aufgebracht werden, sodass durch mehr oder minder starkes Verdrängen von Arbeitsmedium aus dem Vorratsbehälter in den Arbeitsraum des Retarders der Füllungsgrad und damit das Bremsmoment erhöht oder erniedrigt wird. Alternativ kann der Stelldruck auf ein Retardersteuerventil aufgebracht werden, das den Arbeitsmediumstrom in Strömungsrichtung des Arbeitsmediums hinter dem Arbeitsraum, in der Regel an einem Auslass des hydrodynamischen Retarders, anstaut und dadurch den Arbeitsmediumdruck im Arbeitsraum des hydrodynamischen Retarders und den Füllungsgrad des Arbeitsraums mehr oder minder erhöht.

Die Erfindung lässt sich in einem Retarder in dessen Steuervorrichtung integrieren. Die Erfindung soll nachfolgend anhand eines Ausführungsbeispiels und den Figuren exemplarisch beschrieben werden.

Es zeigen:
- Figur 1: eine exemplarische Darstellung der Zuordnung verschiedener Zeitspannen zu verschiedenen Rotordrehzahlen;
- Figur 2: eine schematische Darstellung eines erfindungsgemäß angesteuerten hydrodynamischen Retarders.

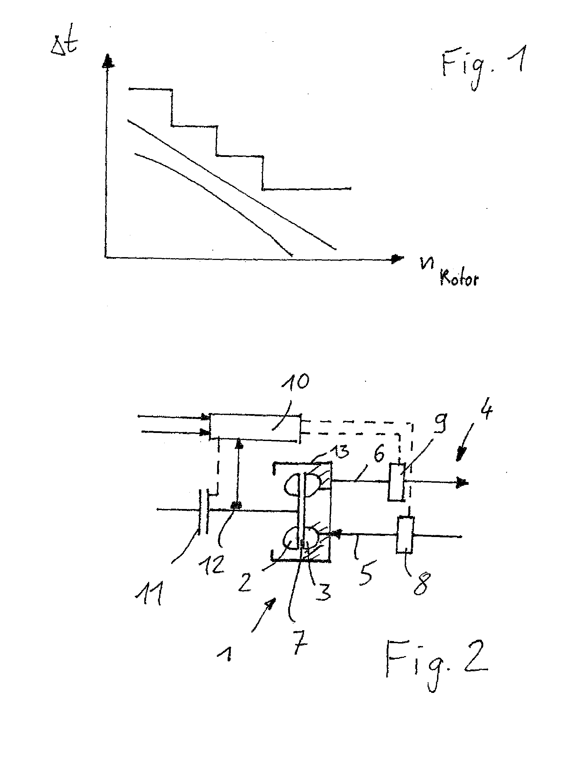

In der Figur 1 ist als Ausführungsbeispiel dargestellt, wie verschiedene vorgegebene Zeitspannen verschiedenen Drehzahlen des Rotors zugeordnet werden können, beispielsweise mittels einer stufenförmigen Zuordnung, einer linearen Zuordnung oder einer stetigen nicht linearen Zuordnung. Die vorgegebenen Zeitspannen sind jene Zeitspannen, welche eine Trennkupplung zum Antreiben des Rotors des hydrodynamischen Retarders noch geschlossen gehalten wird, nachdem eine Retarderausschaltanforderung festgestellt wurde. Innerhalb dieser vorgegebenen Zeitspanne kann sich der Retarder beziehungsweise dessen Arbeitsraum durch die Pumpwirkung des Rotors selbst vom Arbeitsmedium entleeren.

In der Figur 2 ist ein solcher hydrodynamischer Retarder 1 mit einem Rotor 2 und einem Stator 3 dargestellt. Das Arbeitsmedium wird aus einem externen Arbeitsmediumkreislauf 4 dem Arbeitsraum 7 über eine Arbeitsmediumzufuhr 5 zugeführt und zum Kühlen des im Arbeitsraum 7 erwärmten Arbeitsmedium über eine Arbeitsmediumabfuhr 6 aus dem Retarder 1 abgeführt. In der Arbeitsmediumzufuhr 5 ist ein Einlassventil 8 angeordnet, und in der Arbeitsmediumabfuhr 6 ist ein Retarderauslassventil 9 vorgesehen. Die Retardersteuervorrichtung 10 greift sowohl auf das Retardereinlassventil 8 als auch auf das Retarderauslassventil 9 zu. Für den Übergang vom Nichtbremsbetrieb zum Bremsbetrieb wird das Retardereinlassventil 8 geöffnet. Das Retarderauslassventil 9 wird mit einem Stelldruck derart angesteuert, dass es die gewünschte Anstauung des Arbeitsmediums und damit den gewünschten Füllungsgrad des Arbeitsraumes 7 bewirkt. Alternativ käme auch eine Füllungsgradsteuerung mittels einer verdrängenden Druckbeaufschlagung eines Arbeitsmediumvorrats in Betracht.

Beim Übergang vom Bremsbetrieb zum Nichtbremsbetrieb wird das Einlassventil 8 geschlossen, damit kein weiteres Arbeitsmedium in den Arbeitsraum 7 strömen kann. Zugleich wird das Auslassventil 9 noch solange offen gehalten, bis sich der Arbeitsraum 7 auf den gewünschten Zustand entleert hat. Hierzu ist es notwendig, den Rotor 2 fortgesetzt anzutreiben, um dessen Pumpwirkung auszunutzen. Somit wird auch die Trennkupplung 11 noch solange geschlossen gehalten, bis sichergestellt ist, dass die Entleerung in ausreichendem Maße stattgefunden hat.

Da die Dauer der Entleerung von der Drehzahl des Rotors 2 zum Zeitpunkt der gewünschten Abschaltung, das heißt bei der Feststellung der Retarderausschaltanforderung abhängig ist, wird die Drehzahl des Rotors 2 erfasst, beispielsweise über den dargestellten Drehzahlsensor 12, und der Retardersteuervorrichtung 10 mitgeteilt. Der Drehzahlsensor 12 könnte auch an einer anderen Stelle positioniert sein, beispielsweise in Richtung des Antriebsleistungsflusses vor der Trennkupplung 11 oder die Drehzahl könnte der Retardersteuervorrichtung 10 anders zur Verfügung gestellt werden, beispielsweise über einen CAN-Bus, da die Drehzahl in der Regel von einer anderen Drehzahl im Antriebsstrang, in dem der hydrodynamische Retarder 1 vorgesehen ist, abhängig ist, beispielsweise der Getriebewellenabtriebsdrehzahl eines Kraftfahrzeuggetriebes oder von der Fahrzeuggeschwindigkeit, bei einem sogenannten Sekundärretarder oder der Motordrehzahl bei einem Primärretarder. Die Retardersteuervorrichtung 10 steuert ferner, wie durch die gestrichelte Linie angedeutet ist, das Öffnen und Schließen der Trennkupplung 11. Ferner empfängt sie Eingangssignale, beispielsweise von einem Retarderbedienhebel und einem Fahrerassistenzsystem, um eine Retarderausschaltanforderung feststellen zu können.

Wie zuvor dargelegt wurde, können zusätzlich oder alternativ zu der Rotordrehzahl andere Randbedingungen zur Festlegung der Zeitspanne herangezogen werden, über welche die Trennkupplung nach der Feststellung der Retarderausschaltanforderung noch geschlossen bleibt. An dieser Stelle soll nur nochmals beispielhaft wiederholt werden, dass hierfür der Druck im Retarderauslass 6 in Betracht kommt, oder der sogenannte Gehäusedruck im Gehäuse 13 des hydrodynamischen Retarders außerhalb des Arbeitsraumes 7.

## Patentansprüche

1. Verfahren zum Steuern eines über eine Trennkupplung (11) mechanisch abkoppelbaren hydrodynamischen Retarders (1) in einem Kraftfahrzeug, welcher einen umlaufenden beschaufelten Rotor (2) und einen beschaufelten Stator (3) oder einen umlaufenden beschaufelten Rotor (2) und einen in Gegenrichtung hierzu umlaufenden beschaufelten Gegenlaufrotor aufweist, die gemeinsam einen in einem Bremsbetrieb mit Arbeitsmedium befüllten und in einem Nichtbremsbetrieb vom Arbeitsmedium entleerten Arbeitsraum (7) ausbilden, wobei der Rotor (2) im Bremsbetrieb über einen Antriebsstrang mit einer geschlossenen Trennkupplung (11) angetrieben wird und beim Übergang vom Bremsbetrieb zum Nichtbremsbetrieb der Arbeitsraum (7) entleert und die Trennkupplung (11) geöffnet wird, wobei der Übergang vom Bremsbetrieb zum Nichtbremsbetrieb durch eine Retarderausschaltanforderung eines Fahrerassistenzsystems oder durch Betätigen einer Eingabevorrichtung durch einen Fahrzeugführer initiiert wird,
**dadurch gekennzeichnet, dass**
nach der Feststellung des Vorliegens einer Retarderausschaltanforderung die Trennkupplung (11) über eine vorgegebene Zeitspanne geschlossen gehalten wird und der Arbeitsraum (7) des Retarders (1) durch fortgesetztes Antreiben des Rotors (2) und Unterbrechung einer Zufuhr von Arbeitsmedium in den Arbeitsraum (7) vom Arbeitsmedium entleert wird, wobei die vorgegebene Zeitspanne in Abhängigkeit wenigstens einer der folgenden Größen oder wenigstens einer mit einer der Größen korrelierenden Größe bei und/oder nach der Feststellung der Retarderausschaltanforderung variiert wird:
- der Drehzahl des Rotors (2);
- eines Auslassdruckes, gegen welchen die Entleerung des Arbeitsmediums aus dem Arbeitsraum (7) erfolgt;
- des Füllungsgrades des Arbeitsraums mit Arbeitsmedium (7);
- der Temperatur des Arbeitsmediums;
- des Bremsmomentes des hydrodynamischen Retarders (1).

2. Verfahren zum Steuern eines über eine Trennkupplung (11) mechanisch abkoppelbaren hydrodynamischen Retarders (1) in einem Kraftfahrzeug, welcher einen umlaufenden beschaufelten Rotor (2) und einen beschaufelten Stator (3) oder einen umlaufenden beschaufelten Rotor (2) und einen in Gegenrichtung hierzu umlaufenden beschaufelten Gegenlaufrotor aufweist, die gemeinsam einen in einem Bremsbetrieb mit Arbeitsmedium befüllten und in einem Nichtbremsbetrieb vom Arbeitsmedium entleerten Arbeitsraum (7) ausbilden, wobei der Gegenlaufrotor (2) im Bremsbetrieb über einen Antriebsstrang mit einer geschlossenen Trennkupplung (11) angetrieben wird oder der Stator (3) im Bremsbetrieb mit einer geschlossenen Trennkupplung (11) stationär gegen ein stehendes Bauteil abgestützt wird und beim Übergang vom Bremsbetrieb zum Nichtbremsbetrieb der Arbeitsraum (7) entleert und die Trennkupplung (11) geöffnet wird, wobei der Übergang vom Bremsbetrieb zum Nichtbremsbetrieb durch eine Retarderausschaltanforderung eines Fahrerassistenzsystems oder durch Betätigen einer Eingabevorrichtung durch einen Fahrzeugführer initiiert wird,
**dadurch gekennzeichnet, dass**
nach der Feststellung des Vorliegens einer Retarderausschaltanforderung die Trennkupplung (11) über eine vorgegebene Zeitspanne geschlossen gehalten wird und der Arbeitsraum (7) des Retarders (1) durch fortgesetztes Antreiben des Rotors (2) und Unterbrechung einer Zufuhr von Arbeitsmedium in den Arbeitsraum (7) vom Arbeitsmedium entleert wird, wobei die vorgegebene Zeitspanne in Abhängigkeit wenigstens einer der folgenden Größen oder wenigstens einer mit einer der Größen korrelierenden Größe bei und/oder nach der Feststellung der Retarderausschaltanforderung variiert wird:
- der Drehzahl des Rotors (2);
- eines Auslassdruckes, gegen welchen die Entleerung des Arbeitsmediums aus dem Arbeitsraum (7) erfolgt;
- des Füllungsgrades des Arbeitsraums mit Arbeitsmedium (7);
- der Temperatur des Arbeitsmediums;
- des Bremsmomentes des hydrodynamischen Retarders (1).

3. Verfahren gemäß Anspruch 1 oder 2, **dadurch gekennzeichnet, dass** die vorgegebene Zeitspanne mit abnehmender Drehzahl vergrößert wird.

4. Verfahren gemäß einem der Ansprüche 1 bis 3, **dadurch gekennzeichnet, dass** die vorgegebene Zeitspanne mit zunehmendem Auslassdruck vergrößert wird.

5. Verfahren gemäß einem der Ansprüche 1 bis 4, **dadurch gekennzeichnet, dass** die vorgegebene Zeitspanne mit zunehmendem Füllungsgrad vergrößert wird.

6. Verfahren gemäß einem der Ansprüche 1 bis 5, **dadurch gekennzeichnet, dass** die vorgegebene Zeitspanne mit zunehmender Temperatur verkleinert wird.

7. Verfahren gemäß einem der Ansprüche 1 bis 6, **dadurch gekennzeichnet, dass** die vorgegebene Zeitspanne mit zunehmendem Bremsmoment vergrößert wird.

8. Hydrodynamischer Retarder (1) mit einem umlaufenden beschaufelten Rotor (2) und einem beschaufelten Stator (3) oder einem umlaufenden beschaufelten Rotor (2) und einem in Gegenrichtung hierzu umlaufenden Gegenlaufrotor, die gemeinsam einen in einem Bremsbetrieb mit Arbeitsmedium befüllbaren und in einem Nichtbremsbetrieb vom Arbeitsmedium entleerbaren Arbeitsraum (7) ausbilden, mit einem Antriebsstrang, mit dem der Rotor (2) angetrieben wird und in welchem eine Trennkupplung (11) vorgesehen ist, wobei dem hydrodynamischen Retarder (1) eine Retardersteuervorrichtung (10) zugeordnet ist, **dadurch gekennzeichnet, dass** die Retardersteuervorrichtung (10) eingerichtet ist, ein Verfahren gemäß einem der Ansprüche 1 bis 7 auszuführen.

## Claims

1. Method for controlling a hydrodynamic retarder (1), which can be disengaged mechanically by means of a clutch (11), in a motor vehicle, which hydrodynamic retarder (1) has a rotating rotor (2) with blades and a stator (3) with blades or a rotating rotor (2) with blades and an opposing rotor which runs in the opposite direction to the latter and has blades, which stator (3) and rotor (2) together form a working space (7) which is filled with working medium in a braking operating mode and is emptied of the working medium in a non-braking operating mode, wherein in the braking operating mode the rotor (2) is driven by means of a drive train with a closed clutch (11), and at the transition from the braking operating mode into the non-braking operating mode the working space (7) is emptied and the clutch (11) is opened, wherein the transition from the braking operating mode into the non-braking operating mode is initiated by a retarder switch-off request of a driver assistance system or by activation of an input device by a vehicle driver, **characterized in that**
after the detection of the presence of a retarder switch-off request the clutch (11) is kept closed over a predefined time period, and the working space (7) of the retarder (1) is emptied by continuous driving of the rotor (2) and is emptied of the working medium by interruption of a supply of working medium into the working space (7), wherein the predefined time period is varied as a function of at least one of the following variables or at least one variable which correlates with one of the variables when and/or after the retarder switch-off request is detected:
- as a function of the rotational speed of the rotor (2) ;
- as a function of an outlet pressure against which the action of emptying the working medium out of the working space (7) takes place;
- as a function of the filling level of the working space (7) with working medium;
- as a function of the temperature of the working medium; or
- as a function of the braking torque of the hydrodynamic retarder (1).

2. Method for controlling a hydrodynamic retarder (1), which can be disengaged mechanically by means of a clutch (11), in a motor vehicle, which hydrodynamic retarder (1) has a rotating rotor (2) with blades and a stator (3) with blades or a rotating rotor (2) with blades and an opposing rotor which runs in the opposite direction to the latter and has blades, which stator (3) and rotor (2) together form a working space (7) which is filled with working medium in a braking operating mode and is emptied of the working medium in a non-braking operating mode, wherein in the braking operating mode the opposing rotor (2) is driven by means of a drive train with a closed clutch (11), or in the braking operating mode the stator (3) is supported in a stationary fashion against a non-moving component with a closed clutch (11), and at the transition from the braking operating mode into the non-braking operating mode the working space (7) is emptied and the clutch (11) is opened, wherein the transition from the braking operating mode into the non-braking operating mode is initiated by a retarder switch-off request of a driver assistance system or by activation of an input device by a vehicle driver,
**characterized in that**
after the detection of the presence of a retarder switch-off request the clutch (11) is kept closed over a predefined time period, and the working space (7) of the retarder (1) is emptied by continuous driving of the rotor (2) and is emptied of the working medium by interruption of a supply of working medium into the working space (7), wherein the predefined time period is varied as a function of at least one of the following variables or at least one variable which correlates with one of the variables when and/or after the retarder switch-off request is detected:
- as a function of the rotational speed of the rotor (2) ;
- as a function of an outlet pressure against which the action of emptying the working medium out of the working space (7) takes place;
- as a function of the filling level of the working space (7) with working medium;
- as a function of the temperature of the working medium; or
- as a function of the braking torque of the hydrodynamic retarder (1).

3. Method according to Claim 1 or 2, **characterized in that** the predefined time period is made longer as the rotational speed decreases.

4. Method according to one of Claims 1 to 3, **characterized in that** the predefined time period is made longer as the outlet pressure increases.

5. Method according to one of Claims 1 to 4, **characterized in that** the predefined time period is made longer as the filling level increases.

6. Method according to one of Claims 1 to 5, **characterized in that** the predefined time period is made shorter as the temperature increases.

7. Method according to one of Claims 1 to 6, **characterized in that** the predefined time period is made longer as the braking torque increases.

8. Hydrodynamic retarder (1) having a rotating rotor (2) with blades and a stator (3) with blades or a rotating rotor (2) with blades and an opposing rotor which runs in the opposite direction to the latter, which stator (3) and rotor (2) together form a working space (7) which can be filled with working medium in a braking operating mode and can be emptied of the working medium in a non-braking operating mode, having a drive train with which the rotor (2) is driven and in which a clutch (11) is provided, wherein the hydrodynamic retarder (1) is assigned a retarder control device (10), **characterized in that** the retarder control device (10) is configured to carry out a method according to one of Claims 1 to 7.

## Revendications

1. Procédé de commande d'un ralentisseur hydrodynamique (1) pouvant être désaccouplé de façon mécanique via un embrayage de coupure (11) dans un véhicule automobile, ledit ralentisseur comportant un rotor (2) à aubes tournant et un stator (3) à aubes ou un rotor (2) à aubes tournant et un rotor inverse à aubes tournant allant dans la direction inverse à l'autre rotor et formant ensemble une chambre de travail (7) remplie en agent de travail dans un mode de freinage et vidée de son agent de travail dans un mode de non-freinage, le rotor (2) étant entraîné en mode de freinage avec un embrayage de coupure (11) fermé via une chaîne cinématique et vidé lors de la transition du mode de freinage en mode de non-freinage de la chambre de travail (7) et l'embrayage de coupure (11) étant ouvert, la transition du mode de freinage en mode de non-freinage étant lancée par une demande de déconnexion de ralentisseur d'un système d'aide à la conduite ou par actionnement d'un dispositif de saisie par un conducteur du véhicule ;
**caractérisé en ce que** :
après la détection de la présence d'une demande de déconnexion de ralentisseur, l'embrayage de coupure (11) est maintenu fermé pendant un intervalle de temps prédéfini et la chambre de travail (7) du ralentisseur (1) est vidée de son agent de travail en poursuivant l'entraînement du rotor (2) et en interrompant une alimentation en agent de travail dans la chambre de travail (7), l'intervalle de temps prédéfini variant en fonction d'au moins une des grandeurs suivantes ou d'au moins une grandeur corrélée à une des grandeurs à la détection et/ou après la détection de la demande de déconnexion de ralentisseur :
- la vitesse de rotation du rotor (2) ;
- une pression d'échappement à laquelle s'effectue le vidage de l'agent de travail hors de la chambre de travail (7) ;
- le degré de remplissage de la chambre de travail en agent de travail (7) ;
- la température de l'agent de travail ;
- le couple de freinage du ralentisseur hydrodynamique (1).

2. Procédé de commande d'un ralentisseur hydrodynamique (1) pouvant être désaccouplé de façon mécanique via un embrayage de coupure (11) dans un véhicule automobile, ledit ralentisseur comportant un rotor (2) à aubes tournant et un stator (3) à aubes ou un rotor (2) à aubes tournant et un rotor inverse à aubes tournant allant dans la direction inverse à l'autre rotor et formant ensemble une chambre de travail (7) remplie en agent de travail dans un mode de freinage et vidée de son agent de travail dans un mode de non-freinage, le rotor inverse (2) étant entraîné en mode de freinage avec un embrayage de coupure (11) fermé via une chaîne cinématique ou le stator (3) étant maintenu de façon stationnaire contre un composant debout dans le mode de freinage avec un embrayage de coupure (11) fermé et vidé lors de la transition du mode de freinage en mode de non-freinage de la chambre de travail (7) et l'embrayage de coupure (11) étant ouvert, la transition du mode de freinage en mode de non-freinage étant lancée par une demande de déconnexion de ralentisseur d'un système d'aide à la conduite ou par actionnement d'un dispositif de saisie par un conducteur du véhicule ;
**caractérisé en ce que** :
après la détection de la présence d'une demande de déconnexion de ralentisseur, l'embrayage de coupure (11) est maintenu fermé pendant un intervalle de temps prédéfini et la chambre de travail (7) du ralentisseur (1) est vidée de son agent de travail en poursuivant l'entraînement du rotor (2) et en interrompant une alimentation en agent de travail dans la chambre de travail (7), l'intervalle de temps prédéfini variant en fonction d'au moins une des grandeurs suivantes ou d'au moins une grandeur corrélée à une des grandeurs à la détection et/ou après la détection de la demande de déconnexion de ralentisseur :
- la vitesse de rotation du rotor (2) ;
- une pression d'échappement à laquelle s'effectue le vidage de l'agent de travail hors de la chambre de travail (7) ;
- le degré de remplissage de la chambre de travail en agent de travail (7) ;
- la température de l'agent de travail ;
- le couple de freinage du ralentisseur hydrodynamique (1).

3. Procédé selon la revendication 1 ou 2, **caractérisé en ce que** l'intervalle de temps prédéfini augmente à mesure que la vitesse de rotation diminue.

4. Procédé selon l'une quelconque des revendications 1 à 3, **caractérisé en ce que** l'intervalle de temps prédéfini augmente à mesure que la pression d'échappement augmente.

5. Procédé selon l'une quelconque des revendications 1 à 4, **caractérisé en ce que** l'intervalle de temps prédéfini augmente à mesure que le degré de remplissage augmente.

6. Procédé selon l'une quelconque des revendications 1 à 5, **caractérisé en ce que** l'intervalle de temps prédéfini diminue à mesure que la température augmente.

7. Procédé selon l'une quelconque des revendications 1 à 6, **caractérisé en ce que** l'intervalle de temps prédéfini augmente à mesure que le couple de freinage augmente.

8. Ralentisseur hydrodynamique (1) avec un rotor (2) à aubes tournant et un stator (3) à aubes ou un rotor (2) à aubes tournant et un rotor inverse tournant allant dans la direction inverse formant ensemble une chambre de travail (7) pouvant être remplie en agent de travail dans un mode de freinage et vidée de son agent de travail dans un mode de non-freinage, avec une chaîne cinématique, avec laquelle le rotor (2) est entraîné et dans laquelle un embrayage de coupure (11) est prévu, un dispositif de commande de retardateur (10) étant associé au ralentisseur hydrodynamique (1), **caractérisé en ce que** le dispositif de commande de retardateur (10) est conçu pour mettre en oeuvre un procédé selon l'une quelconque des revendications 1 à 7.
